# EUROPEAN PATENT APPLICATION

(11) **EP 1 095 868 A1**
(43) Date of publication of application: **02.05.2001**
(21) Application number: 00122998.8
(22) Date of filing: 23.10.2000
(51) Int. Cl.: B65D 23/10

(54) **Storage container with gripping handle sidewall**

(30) Priority: 01.11.1999 US 430905
(71) Applicant: Dart Industries Inc., Orlando, Florida 32837 (US)
(72) Inventor: Lillelund, Stig, 2820 Gentofte (DK); Heiberg, Jacob, 2920 Charlottenlund (DK); Daenen, Robert H.C.M., 2920 Herne (BE); Mortier, Johan M.J.K., 9506 Grimminge (BE)
(74) Representative: Howden, Christopher Andrew

(57) **Abstract**

A storage container (10) with a sidewall (12), top wall (18) and bottom wall (24) has the sidewall (12) formed with a peripheral shape which permits grasping by the user. At two opposite points the sidewall thickness is reduced to form areas (52) of increased flexibility. The user grips the container by placing the palm over the part of the sidewall (12) between the areas (52) with the fingers and thumb, respectively, on the opposed areas (52) of increased flexibility. Exerting gripping pressure deforms the sidewall (12) at the spaced areas (52), creating the impression of a handle in the container sidewall, and improving the reliability of the grip on the container.

## Description

### BACKGROUND OF THE INVENTION

The present invention relates in general to storage containers for household food. In particular, the present invention relates to an improved storage container having selectively flexible sidewalls for improved gripping of the container.

A wide variety of household food storage containers are known. Many of these include handles or other arrangements for ensuring the user may maintain a firm grip on the container to prevent dropping. This problem varies depending upon the size and shape of the container.

Some of the most difficult to grip are those containers which are relatively tall and thin, such that the user typically grasps the sidewall to lift the container. While it is possible to place a handle on such containers, in a manner similar to a handle on common pitchers, this greatly increases the complexity and cost of the container. Further, the handle occupies volume yet does not contribute to the storage capacity of the container.

One solution to this problem is shown in copending application Serial No. 09/131,260 to the present assignee. The container in that application has a sidewall which is tall, with an oval cross-sectional shape. The container is sized such that the user may manually grasp the sidewall about an end on the major axis of the oval. To improve the ability to grip, the sidewall includes depressed areas on the minor axis, thus forming a pair of ridges on each side of the container. The user's fingers extend over these ridges, with the ridges provide a gripping surface to the user. While this arrangement is acceptable, it is preferred to provide an even more secure gripping surface for the user.

### SUMMARY OF THE INVENTION

An object of the present invention is to provide a storage container which may be easily and securely grasped about a sidewall.

Another object of the present invention is to provide such a container which includes a pair of spaced areas of increased flexibility at the grasping area of the sidewall.

These and other objects are achieved by a storage container with gripping handle sidewall. The container includes a sidewall, top wall and bottom wall. The sidewall is formed with a peripheral shape which permits grasping by the user. At two spaced points the sidewall thickness is reduced to form areas of increased flexibility The portion between the areas remains at the original strength. The user grips the container by placing the palm over the area of original strength, with the fingers and thumb, respectively, on the spaced areas of increased flexibility. Exerting gripping pressure deforms the sidewall at the spaced areas, creating the impression of a handle in the container sidewall, and improving the reliability of the grip on the container.

### BRIEF DESCRIPTION OF THE DRAWINGS

The objects and features of the invention noted above are explained in more detail with reference to the drawings, in which like reference numerals denote like elements, and in which:
Fig. 1 is a top, rear perspective view of a container according to the present invention;
Fig. 2 is a bottom, rear exploded perspective view of the container;
Fig. 3a is a cross-sectional view along line 3a-3a of Fig. 1;
Fig. 3b is a cross-sectional view along line 3b-3b of Fig. 3a;
Fig. 4 is an exploded detail perspective view of the spout area;
Figs. 5 and 6 are cross-sectional views illustrating the operation of the spout;
Fig. 7 is a cross-sectional view along line 7-7 of Fig. 2; and
Fig. 8 is a cross-sectional view similar to Fig. 7 of a second embodiment according to the present invention.

### DETAILED DESCRIPTION OF THE INVENTION

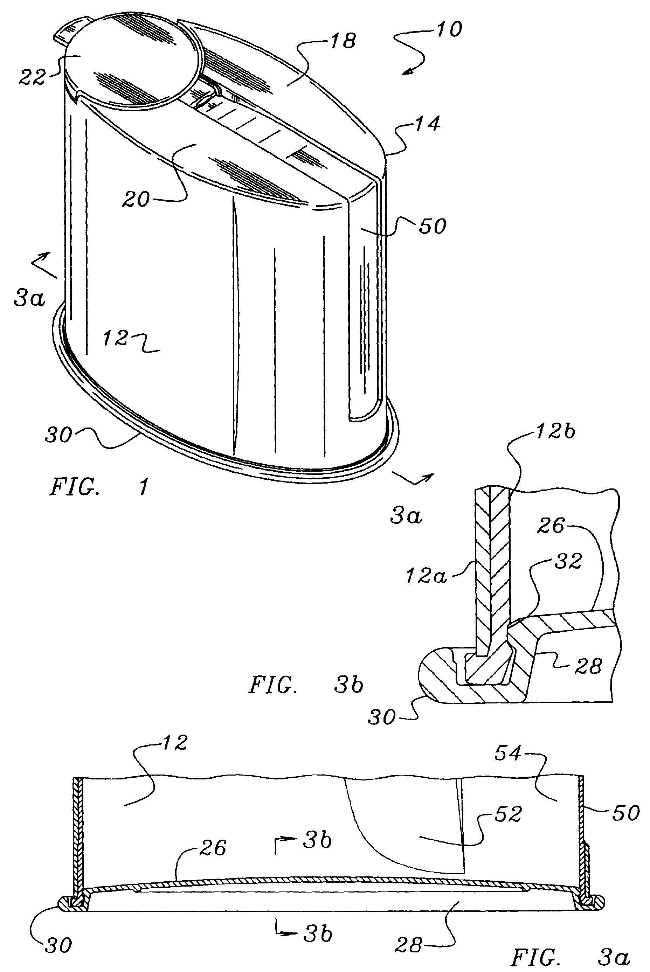

With reference to Fig. 1, a container according to the present invention is generally designated by reference numeral 10. The container includes one or more sidewalls 12 extending between an upper edge 14 and a lower edge 16 (Fig. 2). A top wall 18 is secured to the upper edge 14. In the preferred embodiment, the top wall 18 takes the form of a top panel 20 formed as a monolithic portion of the sidewall 12 together with a cap 22 secured to the top panel in a manner described in more detail below. The entire top wall 18 could, however, be formed as a removable cap. The planar form shown is also preferred for reasons discussed below, but is not required. The container 10 also includes a bottom wall 24 secured to the lower edge 16. In the preferred embodiment shown, the bottom wall 24 is preferably a separate piece which is selectively removable from the lower edge 16. As with the top wall 18, however, the bottom wall 24 could be formed entirely as a bottom panel (not shown) fixed to the sidewalls 12, or as a combination of fixed and removably portions (not shown).

As may be envisioned, the weight of the container contents will rest upon the bottom wall 24, tending to force the bottom wall 24 from the container when lifted. To securely retain the bottom wall 24, the bottom wall 24 includes a central portion 26 from which depends an attachment skirt 28. A closure flange 30 preferably extends peripherally outward from the lower edge of the attachment skirt 28, to extend beyond the sidewall 12 at least at one point thereabout, to provide a gripping surface for the user to more easily remove the bottom wall 24 when desired. The upper edge of the attachment skirt 28 is spaced slightly inward from the edge of the central portion 26, to form a projection which is received within a mating groove 32 formed on the interior of sidewall 12 adjacent the lower edge 16. By forming the sidewall 12 and/or bottom wall 24 of a material having a slight resiliency, such as plastic, this may be seen to provide a relatively secure attachment for the bottom wall 24.

To improve this attachment, however, it is preferred that the bottom wall 24 be formed of a slightly resilient material such as plastic or sheet metal, and that the central portion 26 have an upward domed configuration, as shown. This domed configuration is the relaxed, undeformed state of the bottom wall 24. The bottom wall 24 is designed such that the weight of the container contents will deflect the central portion 26 downward. The greater the weight (to the maximum designed capacity), the greater the deflection, although deflection past the point of planar is not desired. As may be envisioned, as the central portion 26 deflects downward, its outer periphery will expand slightly outward. This will in turn force the periphery of the 26 into the groove 32 with greater force, providing a greater retention of the bottom wall 24. As such, with this arrangement, the greater the weight of the contents, the greater the retention of the bottom wall 24 in position.

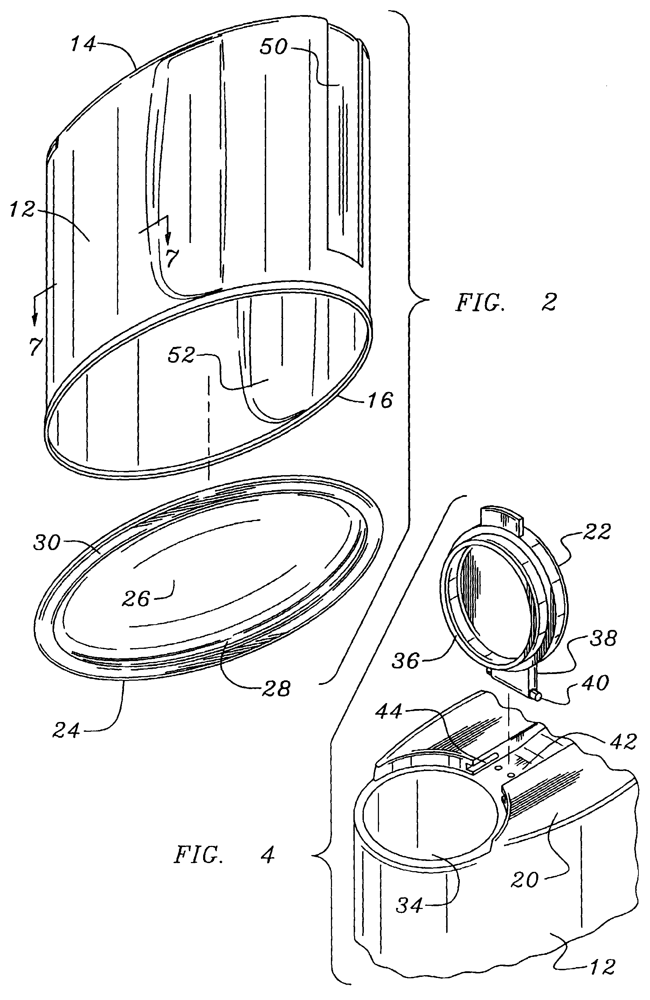

As noted, the top wall 18 could be formed in a similar manner, but it is preferred to provide the top panel 20 and cap 22. This cap 22 of course is used to selectively close a pour spout 34. The pour spout 34 may be formed fully within the top panel 20, but it is preferred that the upper edge 14 form a portion of the periphery of the pour spout 34, as shown in Fig. 4, to permit easier flow of contents from the container 10. As shown, the cap 22 preferably includes a sealing skirt 36 which may be closely received within the pour spout 34 to effectively seal same.

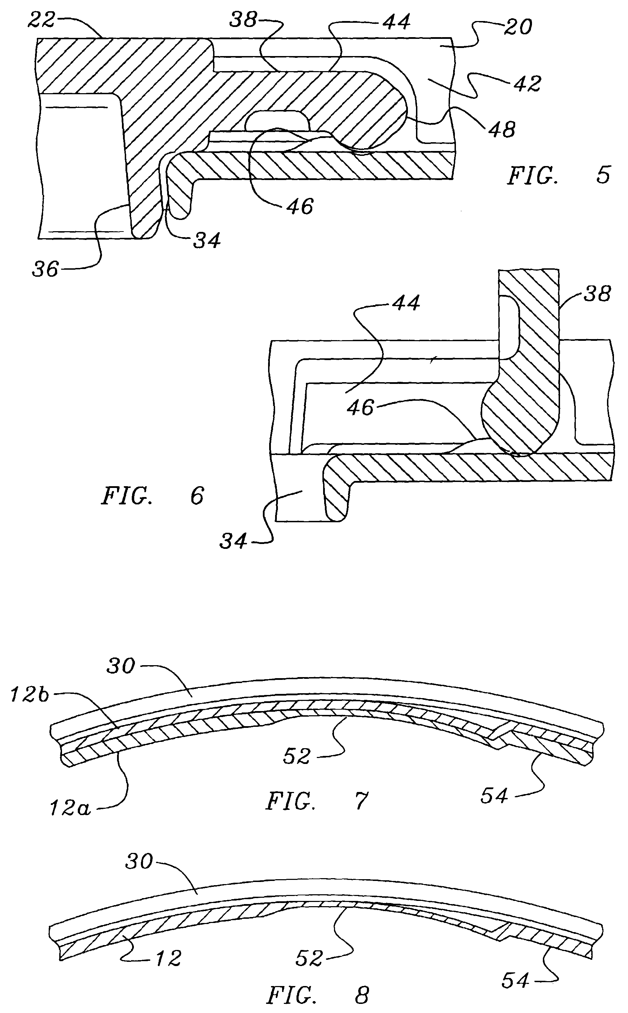

The cap 22 may be mounted to the top panel 20 in a variety of ways. In the preferred embodiment, the cap 22 includes an extension 38 from which a pair of axles 40 extend along a common axis. The top panel 20 includes a central groove 42 which will receive the extension 38, and a pair of axle grooves 44 which open onto the central groove 42 and are sized to receive the axles 40. As best shown in Figs. 5 and 6, a detent 48 may secure the axles 40 in place within the grooves, such that the axles (and thus the entire cap 22) may oscillate between open and closed positions. To permit the cap to remain in the open position, the extension 38 may include a cam projection extending therefrom at a position to create an interference fit with the central groove 42 when the cap 22 is in the open position.

As described, the user may pour contents from the container 10 via the pour spout 34. The user may refill the container through the pour spout 34 as well if desired. However, by inverting the container 10 the user may remove the bottom wall 24 and have a much larger opening for easier convenience. It is for stability in this inverted position that the top wall 18 is preferably planar. This arrangement also ensures that there is a constant freshening of container contents. In other words, the material at the container bottom is not continually covered by fresher material, but is instead passed through the container more quickly.

To more readily determine the amount of contents remaining, it is preferred that a portion of the sidewall 12 be formed of a transparent material. In the preferred embodiment shown, a transparent strip 50 runs from a point adjacent the lower edge 16 to the central groove 42. This strip 50 could be formed as a separate piece of material secured to the sidewall 12. Alternatively, it could be formed of a reduced thickness area providing increased transparency, as disclosed in the above-noted application. In the preferred embodiment shown, however, the sidewall 12 is formed as a two-layer element.

As best shown in Figs. 3a and 7, the sidewall 12 is preferably formed of an inner layer 12a of transparent material, such as plastic, covered almost entirely by an outer layer 12b of another material such as plastic, having appreciably less transparency. Such two layer plastic items are generally known in the art, and may be formed with various techniques. In the present embodiment, the outer layer is not formed (or is removed) along the portions necessary to form the strip 50.

During pouring of contents from the pour spout 34, or other transporting of the container 10, the user will typically grasp the sidewall 12. In this regard, the container 10 is formed with a peripheral shape which will permit this. As may be envisioned, a circular sidewall having a large diameter would be a poor choice of peripheral shape. Rather, the sidewall 12 should have a portion which is sufficiently narrow in the lateral direction to permit grasping. This may be formed by a narrower area projecting from a laterally wider main area (not shown). In the preferred embodiment, the sidewall 12 has an elliptical form, such that the user may readily grasp the smaller radius formed adjacent the ends of the major axis. Further, since the pour spout will preferably be located opposite the grasping portion, the user will typically grasp this preferred form of the container 10 at the end of the major axis opposite pour spout 34.

To assist in this, the outer surface of the sidewall 12 may be formed with a texture to reduce slipping. Further, a pair of spaced indentation could be formed in the sidewall 12 at positions spaced from the end of the major axis, as shown. To provide yet easier gripping, however, it is a feature of the present invention that the sidewall 12 includes a pair of spaced areas 52 having increased flexibility.

In particular, at two areas 52 spaced from the end of the major axis (or other gripping area) the thickness of the sidewall 12 is reduced by an amount sufficient to increase the flexibility of the sidewall 12. These spaced areas 52 are thus separated by a region of original strength 54. This is best illustrated in Figs. 7 and 8. As shown, in the preferred two-layer embodiment, the inner layer 12a is formed of a less flexible material, and thus provides much of the structural strength of the container 10. The outer layer 12b may be formed of a more elastic material providing higher friction. As the inner layer 12a provides the strength, reducing the thickness of the inner layer 12a at spaced areas 52 will result in noticeably increased flexibility. This could of course be provided by a reduction in thickness of both layers, or only the outer layer 12b, but is preferably only in the inner layer 12a as noted.

As may be envisioned, the increased flexibility is limited to these spaced areas 52. The portion of the sidewall 12 between these spaced areas 52 does not have this increased flexibility. As such, the user may grip the container 10 and deform the sidewall 12 inward that the spaced areas 52 by pressure of the fingers and thumb, respectively, with the palm of the hand being located between the spaced areas 52, and thus over the region of original strength 54 . This deformation gives the user the impression that the hand is partially wrapped about the rigid portion of the sidewall beneath the palm, creating the impression of a partial handle.

This arrangement is not limited to multi-layer sidewalls, of course. A second embodiment of the invention is shown in Figure 8, where a single layer sidewall 12 is provided with the spaced areas 52 by simply reducing the thickness of the single layer. This is less preferred due to the differences in light transmission through the sidewall 12. This second embodiment will thus have less aesthetic appeal due to the perceived lack of uniformity in the sidewall 12. It will, however, be less expensive to produce than the two-layer first embodiment.

Although the embodiments of the invention described herein include both a top and bottom edge to the side wall, it will be appreciated that the requirement of a definite edge to the side wall is not considered essential to the invention, and that the surface of the container may be partially or entirely continuous.

From the foregoing it will be seen that this invention is one well adapted to attain all ends and objects hereinabove set forth together with the other advantages which are obvious and which are inherent to the structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth or shown in the accompanying drawings is to be interpreted as illustrative, and not in a limiting sense.

## Claims

1. A storage container with gripping handle sidewall, characterised by a pair of spaced areas of increased flexibility in said side wall, with a region of original strength interposed therebetween, positioned such that a user's palm may rest upon said region of original strength with the thumb and fingers, respectively, on said spaced areas of increased flexibility.

2. The container according to claim 1, further comprising an upper edge and lower edge, whereby said sidewall extends between said upper edge and said lower edge, a top wall being secured to said upper edge, and a bottom wall being secured to said lower edge.

3. The container according to claim 2, whereby said lower edge is removably secured to said bottom wall.

4. The container according to claim 2, whereby said upper edge is removably secured to said top wall.

5. The container according to claim 3 or 4, whereby said wall comprises an attachment skirt around its periphery, said attachment skirt extending downwards in a direction substantially perpendicular to the edge of said wall, a flange extending peripherally outward from the lower edge of said attachment skirt to an extent beyond said sidewall at least at one point, whereby said arrangement provides a gripping surface for ease of removal of said wall.

6. The container according to claim 5, whereby the end of said attachment skirt adjacent said wall is spaced slightly inward of the edge of said wall to form a projection thereof, said projection being received within a mating groove formed on the interior of said sidewall adjacent the lower edge of said sidewall and opposite said projection, and whereby said wall is constructed of a resiliently flexible material such that said projection is retained in said groove.

7. The storage container according to claim 5, wherein a portion of said bottom or top wall describes a substantially domed surface, the elevation of said domed surface being along a direction pointing substantially towards the opposite top or bottom wall of said container, and whereby said wall is sufficiently resiliently flexible that the weight of the contents of said container deflect said portion of said wall in a direction opposite its direction of elevation such that the outer periphery of said wall expands slightly outwards and as a result said projection is forced into said groove with greater force, and as such the arrangement provides a greater retention of said wall given a greater weight of contents.
